# EUROPÄISCHE PATENTSCHRIFT

(11) **EP 2 637 912 B1**
(45) Veröffentlichungstag und Bekanntmachung des Hinweises auf die Patenterteilung: **03.09.2014**
(21) Anmeldenummer: 11770455.1
(22) Anmeldetag: 18.10.2011
(51) Int. Cl.: F16C 7/02, B62D 7/20, B60G 7/00

(54) **LENKERELEMENT MIT ÜBERLASTSICHERUNG**
SUSPENSION ELEMENT WITH OVERLOAD PROTECTION
BIELETTE AVEC PROTECTION DE SURCHARGE

(30) Priorität: 11.11.2010 DE 102010043778
(43) Veröffentlichungstag der Anmeldung: 18.09.2013
(73) Patentinhaber: ZF Friedrichshafen AG, 88038 Friedrichshafen (DE)
(72) Erfinder: DIEKHOFF, Jens, 49448 Lemförde (DE); FRICKE, Cord, 49453 Dickel (DE); SCHEPER, Frank, 49624 Loeningen (DE); NACHBAR, Frank, 49448 Lemfoerde (DE); NORDLOH, Alfons, 49429 Visbek (DE)
(86) Internationale Anmeldenummer: PCT/EP2011/068142
(87) Internationale Veröffentlichungsnummer: WO 2012/062537

(56) Entgegenhaltungen:
- EP-A2- 0 355 405
- WO-A1-2011/060775
- DE-A1- 2 845 345
- DE-A1- 19 911 121
- DE-U- 7 215 060
- JP-A- 3 061 105
- JP-U- H 035 574

## Beschreibung

Die Erfindung betrifft ein aus zumindest zwei im Wesentlichen stabförmigen Lenkerabschnitten bestehendes Lenkerelement mit Überlastsicherung zur koppelnden Verbindung zweier Baugruppen oder Bauteile, gemäß dem Oberbegriff des Patentanspruchs 1.

Gattungsgemäße Lenkerelemente der eingangs genannten Art kommen beispielsweise, jedoch keineswegs ausschließlich, bei Kraftfahrzeugen in Form von Lenkern oder Spurstangen für die Radaufhängung bzw. Lenkung zum Einsatz. Dort dienen derartige Lenkerelemente der Übertragung von Druck- und Zugkräften und damit beispielsweise der Radführung sowie - bei gelenkten Achsen - der Einstellung des gewünschten Lenkwinkels am Radträger.

Insbesondere im Fahrzeugbau werden dabei hohe Ansprüche an derartige Strebenelemente gestellt, darunter vor allem hohe Belastbarkeit und Dauerfestigkeit, hohe Sicherheit gegen Versagen ebenso wie hohe Korrosionsbeständigkeit. Gleichzeitig sollen derartige Strebenelemente möglichst wenig Bauraum in Anspruch nehmen, um mögliche Kollisionen mit benachbarten Baugruppen zu vermeiden, bzw. um die Bewegungsfreiheit anderer Bauteile und Baugruppen im Bereich des Fahrwerks nicht einzuschränken.

Insgesamt stellen gattungsgemäße Lenkerelemente für die Fahrsicherheit des Kraftfahrzeugs somit entscheidende Bauteile dar und werden daher häufig mit hoher Steifigkeit und Versagenssicherheit dimensioniert. Neben grundsätzlichen Anforderungen nach geringen Kosten und niedriger Masse ist gerade bei Lenkerelementen jedoch auch ein möglichst exakt kontrollierbares Versagensverhalten im Crash- oder Überlastfall von zunehmender und mit entscheidender Bedeutung.

Mit diesem Hintergrund besitzen aus dem Stand der Technik bekannte Lenkerelemente oder Spurstangen an Kraftfahrzeugen oftmals eine definierte Versagenssicherheit bzw. Knickstabilität insbesondere bei der Übertragung von Druckkräften, oder es werden einfach- bzw. doppeltwirkende Überlastsicherungen vorgesehen, die bei Überschreitung einer definierten Zug- oder auch Drucklast unter Energieaufnahme eine kontrollierte Verformung bzw. Längenänderung des Lenkers oder der Spurstange erlauben. Auf diese Weise wird ein kontrollierter Energieabbau im Crashfall unterstützt und es werden angrenzende Bauteile (wie beispielsweise Achsschenkel oder Lenkgetriebe) vor Zerstörung geschützt.

Derartige Überlastsicherungen für gattungsgemäße Lenkerelemente werden im Stand der Technik bislang häufig als Wellrohrabschnitte, als Reibelemente oder als umzustülpende bzw. abzuwickelnde Blechstreifen- oder Drahtanordnungen ausgebildet. Beispiele hierfür sind aus der Druckschrift DE 39 15 991 A1 bekannt.

Diese bekannten, teilweise auch doppeltwirkend ausgeführten Überlastsicherungen weisen jedoch je nach Bauform eine Reihe von Nachteilen auf. So bringen Lösungen mit Wellrohren eine im Normalbetrieb eines Lenkerelements sowie bereits bei kleinen Belastungen unerwünschte axiale Nachgiebigkeit sowie Biegeelastizität mit sich. Überlastsicherungen mit umzustülpenden Blechstreifen oder mit abzuwickelnden Drahtwindungen sind konstruktiv aufwändig und daher teuer, benötigen zur Erzielung der gewünschten Betriebssteifigkeit ggf. zusätzliche Reibelemente, und nehmen erheblichen radialen Bauraum ein.

Eine weitere Anforderung an derartige Lenkerelemente mit Überlastsicherung besteht zudem darin, auch bei hoher Überlast nicht komplett zu versagen bzw. sich zu separieren, um eine grundsätzliche Fahrfähigkeit bzw. Lenkfähigkeit des Fahrzeugs auch im Versagensfall noch zu gewährleisten. Schließlich ist es zudem auch wünschenswert, dass dem Fahrer des Kraftfahrzeugs unmittelbar signalisiert wird, falls die Überlastsicherung eines Lenkerelements im Fahrwerk angesprochen haben sollte, also falls aufgrund Überlast eventuelle Beschädigungen im sicherheitsrelevanten Bereich der Lenkung bzw. der Radaufhängung aufgetreten sein sollten. Dem Fahrer soll nach dem Ansprechen einer Überlastsicherung also deutlich signalisiert werden, dass das Fahrzeug bzw. die Radaufhängung eine Inspektion benötigt und nicht weiter betrieben werden sollte. Diese Anforderung wird durch das aus dem EP 0 359 405 A2 bekannten Lenkerelement erfüllt.

Schließlich führen aktuelle Entwicklungen insbesondere im Bereich der Fahrwerkstechnik dazu, dass die bei Lenkerelementen, beispielsweise Spurstangen, auftretenden Kräfte aus Betriebslasten und Sonderereignissen sowie das geforderte Versagenskraftfenster immer enger beieinander liegen, von einer entsprechenden Überlastsicherung aber nach wie vor differenziert werden müssen, weshalb eine Überlastsicherung auch unter diesen Bedingungen zuverlässig und reproduzierbar zwischen Betriebslast und Versagenslast unterscheiden muss.

Auch diese Anforderungen werden durch die aus dem Stand der Technik bekannten Lösungen nicht oder nicht im gewünschten Maße, insbesondere nicht in Kombination erfüllt.

Mit diesem Hintergrund ist es Aufgabe der vorliegenden Erfindung, ein Lenkerelement mit Überlastsicherung zu schaffen, mit dem die genannten Nachteile des Standes der Technik überwunden werden. Insbesondere soll das Lenkerelement das im Fahrwerksbereich erwünschte, definierte Versagensverhalten im Crash- oder Überlastfall aufweisen, sprich, das Lenkerelement soll im Normalbetrieb eine hohe Steifigkeit bieten, wobei gleichzeitig die Versagenslast exakt definierbar und dauerhaft reproduzierbar sein soll, ferner soll nach dem Versagen ein bestimmter Deformationsweg eingehalten werden, und im Überlastfall bzw. bei weiterer Krafterhöhung soll zunächst kein Totalversagen des Bauteils eintreten. Zudem soll die Fahr- bzw. Lenkfähigkeit des Fahrzeugs auch im Versagensfall noch gegeben sein, und es soll eine eindeutige Signalisierung für den Fahrzeugführer bezüglich der im Fahrwerk aufgetretenen Überlast erfolgen. Nicht zuletzt soll das Lenkerelement im Sinne einer modularen Bauweise mit geringem Aufwand an unterschiedliche Randbedingungen und Kundenforderungen insbesondere bezüglich der Versagenslasten angepasst werden können.

Diese umfängliche Aufgabe wird durch ein Lenkerelement mit den Merkmalen des Patentanspruchs 1 gelöst. Bevorzugte Ausführungsformen sind Gegenstand der Unteransprüche.

Das erfindungsgemäße Lenkerelement dient in an sich zunächst bekannter Weise - beispielsweise als Spurstange - zur koppelnden Verbindung zweier Baugruppen oder Bauteile vorzugsweise am Fahrwerk eines Kraftfahrzeugs, und umfasst hierzu zwei im Wesentlichen stabförmige Lenkerabschnitte. Dabei sind die Lenkerabschnitte des Lenkerelements in für sich genommen ebenfalls bekannter Weise mittels einer Überlastsicherung miteinander verbunden, und im Überlastfall axial gegeneinander bewegbar.

Erfindungsgemäß jedoch zeichnet sich das Lenkerelement dadurch aus, dass die Überlastsicherung zumindest ein die beiden Lenkerabschnitte formschlüssig starr verbindendes metallisches Abscherelement umfasst. Dabei ist das Abscherelement modular auswählbar bzw. austauschbar, und die Überlastsicherung weist zumindest einen starren Endanschlag zur Begrenzung des axialen Relativbewegungswegs der beiden Lenkerabschnitte im Überlastfall auf.

Das Abscherelement aus Metall bietet den Vorteil, auf kleinstmöglichen Raum hohe Kräfte entlang der Längsrichtung des Lenkerelements übertragen zu können, wobei gleichzeitig die Versagenskraft, also diejenige Längskraft im Lenkerelement, bei der ein Abscheren des Abscherelements erfolgt, zuverlässig reproduzierbar festgelegt und über die Lebensdauer des Lenkerelements sowie weitestgehend unabhängig von etwaigen Temperaturschwankungen innerhalb enger Toleranzgrenzen aufrechterhalten werden kann. Auf diese Weise lässt sich das anwendungsseitig zunehmend geforderte enge Funktionsfenster in Bezug auf die reproduzierbare Höhe der Abscherkräfte konstruktiv verwirklichen sowie langfristig einhalten.

Zudem lässt sich das metallische Abscherelement auch bereits im Vorfeld der Herstellung bzw. Montage des Lenkerelements auf Einhaltung der die Abscherkräfte bestimmenden Toleranzen - bezüglich seiner Abmessungen und Materialeigenschaften - überprüfen. Auch auf diese Weise kann sichergestellt werden, dass das geforderte Funktionsfenster im Betrieb des Lenkerelements bzw. der Überlastsicherung tatsächlich eingehalten wird.

Das Abscherelement der Überlastsicherung ist erfindungsgemäß zudem modular auswählbar bzw. austauschbar ausgeführt. Dies bedeutet, dass die Überlastsicherung und damit das Lenkerelement durch vergleichsweise einfache Auswahl bzw. Anpassung des verwendeten Abscherelements mit geringstmöglichem Aufwand an unterschiedliche Kundenanforderungen bezüglich der Versagenskräfte des Lenkerelements angepasst werden kann, wobei gleichzeitig die sonstigen Maße bzw. Bauteile des Lenkerelements nahezu unverändert erhalten bleiben.

Erfindungsgemäß weist die Überlastsicherung zudem einen starren Endanschlag zur Begrenzung des axialen Relativbewegungswegs der beiden Lenkerabschnitte für den Überlastfall auf. Auf diese Weise wird zunächst einmal sichergestellt, dass das Lenkerelement im Überlastfall, in dem also ein Versagen und Abscheren des Abscherelements stattfindet, seine grundsätzliche Funktionsfähigkeit weiter beibehält, ohne dass die Lenkerabschnitte, aus denen das Lenkerelement besteht, unter möglichem Verlust der Fahr- bzw. Lenkfähigkeit des Kraftfahrzeugs voneinander getrennt werden.

Auch führt - im Unterschied zu aus dem Stand der Technik bekannten Lösungen, bei denen beispielsweise Überlastsicherungen mit Verformungselementen zum Einsatz kommen - die Verwendung eines metallischen Abscherelements in Kombination mit einem begrenzten axialen Relativbewegungsweg der beiden Lenkerabschnitte im Überlastfall dazu, dass nach dem schlagartigen Versagen des Abscherelements ein kräftearmes, aber begrenztes axiales Spiel der beiden Lenkerabschnitte gegeneinander auftritt. Hierdurch bleibt nicht nur das Fahrzeug fahr- bzw. manövrierfähig, sondern es wird dem Fahrzeugführer (beispielsweise im Anwendungsfall bei einer Spurstange) aufgrund des damit plötzlich auftretenden Lenkungsspiels am Lenkrad deutlich spürbar signalisiert, dass im Bereich des Fahrwerks bzw. der Lenkung eine Beschädigung aufgetreten sein muss.

Bevorzugte Ausführungsformen der Erfindung sehen dabei vor, dass das Abscherelement entlang beider axialer Richtungen des Lenkerelements abscherbar ist, bzw. dass die Überlastsicherung einen axialen Relativbewegungsweg sowie einen Endanschlag entlang jeder der beiden axialen Richtungen des Lenkerelements bereitstellt.

Diese Ausführungsform hat den Vorteil, dass die Überlastsicherung auf Funktion sowohl in Zugrichtung als auch in Druckrichtung ausgelegt werden kann. Sowohl bei einer axialen Überlast in Zugrichtung als auch in Druckrichtung des Lenkerelements erfolgt somit ein Abscheren des Abscherelements, wobei gleichzeitig jeweils ein axial begrenztes Spiel innerhalb der Überlastsicherung entsteht, die wiederum sowohl die Funktionsfähigkeit des Lenkerelements nach aufgetretener Überlast sicherstellt, als auch die Signalisierungsfunktion für den Fahrzeugführer übernimmt.

Eine weitere bevorzugte Ausführungsform der Erfindung sieht vor, dass erster und zweiter Lenkerabschnitt im Bereich der Überlastsicherung koaxial ineinandergreifen, wobei der zweite Lenkerabschnitt im Überlappungsbereich hülsenartig ausgebildet ist und das dem Überlappungsbereich zugeordnete Ende des ersten Lenkerabschnitts aufnimmt. Dabei können erster und zweiter Lenkerabschnitt innerhalb des Überlappungsbereichs insbesondere eine Kegelpassung aufweisen bzw. bilden.

Der koaxiale gegenseitige Eingriff, insbesondere mittels einer Kegelpassung, führt zu einer genauen und spielfreien Erhaltung der Relativposition der beiden Lenkerabschnitte im Überlappungsbereich auch unter Belastung, beispielsweise unter Biegebelastung des Lenkerelements. Auf diese Weise werden auch undefinierte Biegelasten über den gegenseitigen koaxialen Eingriff bzw. über die Kegelpassung zwischen den beiden Lenkerabschnitten weitergegeben, ohne dass das Abscherelement hierbei nennenswert bzw. unsymmetrisch belastet wird. Diese Ausführungsform verbessert somit zusätzlich die dauerhafte Zuverlässigkeit des Lenkerelements im Hinblick auf die Beibehaltung des Funktionsfensters und der konstruktiv vorgesehenen Versagenskräfte der Überlastsicherung.

Die Erfindung lässt sich zunächst einmal unabhängig von der Formgebung und konstruktiven Ausbildung des Abscherelements verwirklichen, solange die für die jeweils geforderten Versagenskräfte erforderlichen Abscherquerschnitte realisiert werden. Eine bevorzugte Ausführungsform der Erfindung jedoch sieht vor, dass das Abscherelement als Scherstift ausgebildet ist. Dabei überlappen erster und zweiter Lenkerabschnitt des Lenkerelements einander im Bereich der Überlastsicherung in axialer Richtung zumindest bereichsweise. Vorzugsweise durchgreift dabei das Abscherelement den ersten und den zweiten Lenkerabschnitt im Überlappungsbereich entlang des vollständigen Durchmessers des Überlappungsbereichs.

Die Ausbildung des Abscherelements als Scherstift, der zudem die einander vorzugsweise koaxial überlappenden Lenkerabschnitte bevorzugt vollständig durchgreift, führt einerseits zu einer kostengünstigen Realisierung der Überlastsicherung, indem die einander überlappenden Lenkerabschnitte im montierten Zustand mit einer einfachen Durchgangsbohrung versehen werden, welche wiederum den Scherstift aufnimmt. Andererseits ist auf diese Weise die modulare Austauschbarkeit des Abscherelements und die entsprechende Anpassbarkeit der Überlastsicherung an unterschiedliche Randbedingungen bzw. Kundenanforderungen einfach realisierbar, indem Bohrungs- und Stiftdurchmesser so gewählt werden, dass sich die vorgesehene Abscherkraft ergibt.

Eine weitere bevorzugte Ausführungsform der Erfindung sieht vor, dass das Abscherelement als eine im Überlappungsbereich der Lenkerabschnitte angeordnete kreisringförmige Scherscheibe ausgebildet ist. Vorzugsweise ist die Scherscheibe dabei jeweils mittels eines am jeweiligen Lenkerabschnitt formschlüssig angeordneten Klemmrings mit dem ersten und/oder mit dem zweiten Lenkerabschnitt formschlüssig verbunden.

Die Ausbildung des Abscherelements als Scherscheibe ist vorteilhaft insofern, als auf diese Weise hohe Abscherkräfte zuverlässig sowie innerhalb eines geringen Bauteilvolumens der Überlastsicherung realisiert werden können. Die formschlüssige Verbindung der Scherscheibe mit den jeweiligen Lenkerabschnitten mittels jeweils eines Klemmrings ist vorteilhaft insofern, als die Überlastsicherung auf diese Weise modular an unterschiedliche Dicken und/oder Durchmesser der Scherscheibe angepasst werden kann, ohne dass sonstige nennenswerte Änderungen der Überlastsicherung bzw. des Lenkerelements erforderlich sind. Die Klemmringe zur Verbindung der Scherscheibe mit den Lenkerabschnitten werden dabei vorzugsweise durch Gewinde oder durch Umformung, beispielsweise Verrollung, formschlüssig mit dem jeweiligen Lenkerabschnitt verbunden.

Die Erfindung wird zunächst einmal unabhängig davon verwirklicht, wie das begrenzte axiale Spiel bzw. der begrenzte axiale Relativbewegungsweg der beiden Lenkerabschnitte im Überlastfall konstruktiv verwirklicht wird. Eine bevorzugte Ausführungsform der Erfindung sieht jedoch vor, dass ein Mittel zur Begrenzung des axialen Relativbewegungswegs entlang zumindest einer axialen Richtung des Lenkerelements durch zwei axial beabstandete, innere und äußere radiale Absätze der Überlastsicherung gebildet ist. Dabei ist der innere radiale Absatz innerhalb des Überlappungsbereichs der Lenkerabschnitte einstückig am ersten Lenkerabschnitt, und der äußere radiale Absatz an einem dem zweiten Lenkerelement zugeordneten Klemmring einstückig angeordnet.

Auf diese Weise erhält zumindest der dem zweiten Lenkerelement zugeordnete Klemmring eine konstruktive Doppelfunktion, indem der Klemmring einerseits zur formschlüssigen Befestigung der Scherscheibe am zweiten Lenkerelement dient, und zum anderen gleichzeitig das axiale Spiel und den Axialanschlag im Überlastfall bereitstellt bzw. bildet. Auch lässt sich auf diese Weise der Axialanschlag konstruktiv robust und kostengünstig jeweils durch einstückige Anordnung der beiden radialen Absätze am ersten Lenkerabschnitt bzw. am Klemmring bilden. Zudem kann der Klemmring auf diese Weise durch einfachen Überwurf über den ersten Lenkerabschnitt montiert und so der Axialanschlag gebildet werden, ohne dass dabei eine Umformung eines der verwendeten Bauteile erforderlich wäre.

Gemäß einer hierzu alternativen Ausführungsform ist vorgesehen, dass ein Mittel zur Begrenzung des axialen Relativbewegungswegs entlang zumindest einer axialen Richtung des Lenkerelements durch zwei axial beabstandete, innere und äußere radiale Absätze der Überlastsicherung gebildet ist, wobei der innere radiale Absatz wieder innerhalb des Überlappungsbereichs der Lenkerabschnitte einstückig am ersten Lenkerabschnitt angeordnet ist, während der äußere radiale Absatz hier an dem im Überlappungsbereich hülsenartig ausgebildeten zweiten Lenkerabschnitt einstückig in Form eines radial einwärts umgeformten Einzugs angeordnet ist. Diese Ausführungsform ist konstruktiv besonders einfach, insbesondere da sie mit einer minimalen Teileanzahl auskommt. Der axiale Relativbewegungsweg im Überlastfall wird bei dieser Ausführungsform mit anderen Worten dadurch gebildet, dass der erste Lenkerabschnitt mit einem darin angeordneten äußeren radialen Absatz in das hülsenförmige Ende des zweiten Lenkerabschnitts eingeführt wird, wonach das hülsenförmige Ende des zweiten Lenkerabschnitts radial einwärts so umgeformt wird, dass das Ende des ersten Lenkerabschnitts mit dem daran angeordneten äußeren radialen Absatz in dem hülsenförmigen Ende des zweiten Lenkerabschnitts formschlüssig, jedoch unter begrenztem axialem Spiel eingeschlossen ist.

Eine weitere hierzu alternative Ausführungsform der Erfindung sieht vor, dass ein Mittel zur Begrenzung des axialen Relativbewegungswegs im Überlastfall durch zwei axial beabstandete, innere und äußere radiale Absätze der Überlastsicherung gebildet ist, wobei der innere radiale Absatz innerhalb des Überlappungsbereichs der Lenkerabschnitte wieder einstückig am ersten Lenkerabschnitt angeordnet ist, während der äußere radiale Absatz an dem im Überlappungsbereich hülsenartig ausgebildeten zweiten Lenkerelement in Form eines in radialer Richtung eingeformten Anschlagrings angeordnet ist. Die Realisierung des axialen Relativbewegungswegs gemäß dieser Ausführungsform ermöglicht aufgrund des eingeformten Anschlagrings einen besonders widerstandsfähigen axialen Anschlag der beiden Lenkerabschnitte in Axialrichtung und eignet sich damit insbesondere für hochbeanspruchte Lenkerelemente.

Eine weitere besonders bevorzugte Ausführungsform der Erfindung sieht vor, dass Überlastsicherung und Abscherelement in einem das Strebenelement im Bereich der Überlastsicherung umgreifenden Sicherungsgehäuse angeordnet sind. Vorzugsweise umschließt das Sicherungsgehäuse dabei die Überlastsicherung mit dem Abscherelement allseitig anliegend und umgreift die an der Überlastsicherung angreifenden Strebenenden radial spaltlos. Dank des Sicherungsgehäuses, welches die Überlastsicherung und die an der Überlastsicherung angreifenden Strebenenden des Lenkerelements vorzugsweise allseitig anliegend umschließt, ergibt sich ein dichter Einschluss der Überlastsicherung und ein dementsprechender Schutz vor Umgebungseinflüssen und Korrosion. Zusätzlich führt der Einschluss der Überlastsicherung sowie der Strebenenden durch das Sicherungsgehäuse zu einer Versteifung des Bereichs der Überlastsicherung gegen Biegung und trägt dadurch ebenfalls zur Funktionssicherheit der Überlastsicherung und des Lenkerelements bei.

Mit diesem Hintergrund sieht eine weitere Ausführungsform der Erfindung vor, dass ein Mittel zur Begrenzung des axialen Relativbewegungswegs im Überlastfall wieder durch zwei axial beabstandete, innere und äußere radiale Absätze der Überlastsicherung gebildet ist, wobei der innere radiale Absatz wieder einstückig an einem Lenkerabschnitt angeordnet ist, während der äußere radiale Absatz hier durch einen radialen Einzug des Sicherungsgehäuses gebildet ist. Der äußere radiale Absatz als Anschlag für den axialen Relativbewegungsweg kann dabei insbesondere durch einen Querschnittsübergang des Sicherungsgehäuses im Bereich der an die Überlastsicherung angreifenden Strebenenden gebildet sein. Dank dieser Ausführungsform erhält das Sicherungsgehäuse eine Mehrfachfunktion im Hinblick auf Korrosionsschutz der Überlastsicherung ebenso wie im Hinblick auf die Versteifung der Überlastsicherung gegenüber Biegung, und zusätzlich als axiale Wegbegrenzung für die Relativbewegung der Lenkerabschnitte im Überlastungsfall.

Eine weitere bevorzugte Ausführungsform der Erfindung sieht vor, dass ein Mittel zur Begrenzung des axialen Relativbewegungswegs im Überlastfall entlang zumindest einer axialen Richtung durch einen die beiden Lenkerelemente in deren Überlappungsbereich radial durchdringenden Anschlagstift gebildet ist. Dabei durchgreift der Anschlagstift zumindest einen der beiden Lenkerabschnitte im Überlappungsbereich in einer bezüglich des Lenkerelements axial ausgerichteten Langlochausnehmung. Auf diese Weise lässt sich eine konstruktiv besonders einfache und kostengünstige Ausführung des Lenkerelements mit Überlastsicherung erhalten, beispielsweise dadurch, dass die beiden Lenkerabschnitte durch zwei Verbindungsstifte miteinander verkoppelt werden, wobei einer der Verbindungsstifte als Abscherelement und der zweite Verbindungsstift - im Zusammenwirken mit der Langlochausnehmung eines der Lenkerabschnitte - als Anschlagelement für den axialen Relativbewegungsweg im Überlastfall dient.

Weitere Ausführungsform der Erfindung schließlich sehen vor, dass der erste und/oder zweite Lenkerabschnitt an seinem der Überlastsicherung abgewandten Ende zur formschlüssigen Aufnahme eines weiteren Lenkerabschnitts oder des Schafts eines Kugelgelenks eingerichtet ist; bzw. dass der erste und/oder zweite Lenkerabschnitt an seinem der Überlastsicherung abgewandten Ende einstückig mit einer Gelenkkugel ausgebildet ist. Auf diese Weise ergibt sich mit einem Minimum an Bauteilaufwand eine konstruktiv einfache und kostengünstige Integration der Überlastsicherung in ein Lenkerelement.

Im Folgenden wird die Erfindung anhand lediglich Ausführungsbeispiele darstellender Zeichnungen näher erläutert. Dabei zeigt:
- Fig. 1: ein Lenkerelement ohne Überlastsicherung gemäß dem Stand der Technik;
- Fig. 2: eine Ausführungsform für ein erfindungsgemäßes Lenkerelement mit Überlastsicherung im Halbschnitt; in
- Fig. 3: in einer Fig. 2 entsprechenden Darstellung eine weitere Ausführungsform für ein erfindungsgemäßes Lenkerelement mit Überlastsicherung;
- Fig. 4: in einer Fig. 2 und 3 entsprechenden Darstellung eine weitere Ausführungsform für ein erfindungsgemäßes Lenkerelement mit Überlastsicherung;
- Fig. 5: eine weitere Ausführungsform eines erfindungsgemäßen Lenkerelements mit Überlastsicherung im Längsschnitt;
- Fig. 6: eine weitere Ausführungsform eines erfindungsgemäßen Lenkerelements mit Überlastsicherung; und
- Fig. 7: das Lenkerelement gemäß Fig. 6 im Längsschnitt.

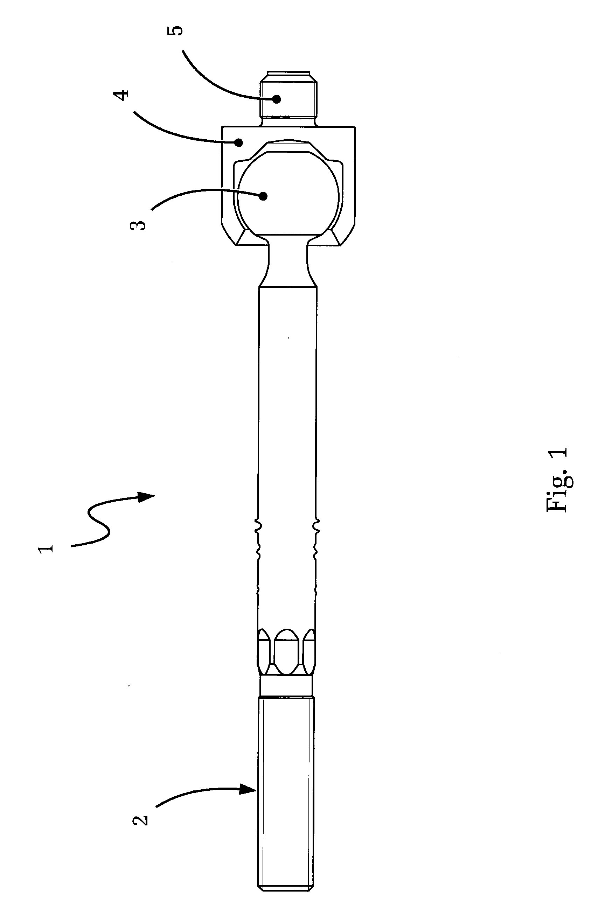

Fig. 1 zeigt ein Lenkerelement ohne Überlastsicherung gemäß dem Stand der Technik. Man erkennt einen stabförmigen Lenkerabschnitt 1, wobei der Lenkerabschnitt zeichnungsbezogen linksseitig ein Gewinde 2 zur Anbindung beispielsweise an einen weiteren Lenkerabschnitt oder an ein Anschlussbauteil aufweist. Zeichnungsbezogen rechtsseitig trägt der Lenkerabschnitt einstückig eine Gelenkkugel 3, die in der Darstellung gemäß Fig. 1 gelenkig in einem Gelenkgehäuse 4 mit Anschlussgewinde 5 aufgenommen ist.

Das in Fig. 1 dargestellte Lenkerelement weist somit keine Überlastfunktion auf, die über ein etwaiges Ausknicken des Lenkerabschnitts 1 - bei Überlast in Druckrichtung - hinausgeht. Auch wenn im Stand der Technik teilweise ein Durchsatz (also ein bereichsweise gebogener bzw. gekrümmter Verlauf des Lenkerabschnitts 1 beispielsweise bei einer Spurstange) verwendet und auf eine bestimmte Knicklast in Zug- und/oder Druckrichtung hin ausgelegt wird, so lässt sich damit kaum das bei aktuellen Anforderungen eng gesetzte Funktionsfenster bezüglich der vorgesehenen Versagenskräfte sowie bezüglich weiterer Funktionen einhalten.

Weder ist die Höhe der Versagenskraft bei einem auf Versagen durch Ausknicken ausgelegten Lenkerelement genügend genau reproduzierbar, noch entspricht der Kraft-Weg-Versagensverlauf der zunehmend gewünschten, definierten Versagenskurve mit einem zunächst steilen Anstieg bis zum Versagenspunkt (also mit hoher Lenkersteifigkeit vor dem Versagen), daran anschließend mit einem leichten oder starken Abfall der Verformungskraft, und schließlich mit einem möglichst gleichmäßigen, niedrigen Kraftniveau entlang des gesamten (und zudem begrenzten) Verformungswegs. Auch die Aufgabe der Signalisierung einer aufgetretenen Überlast bzw. Beschädigung beispielsweise im Fahrwerk oder in der Lenkung eines Kraftfahrzeugs - durch punktuelles, schlagartiges Versagen und anschließende Bildung eines begrenzten Axialspiels - was vom Fahrzeugführer am Lenkrad leicht wahrgenommen werden kann, wird durch die aus dem Stand der Technik bekannten Lenkerelemente mit oder ohne Überlastsicherung nicht erfüllt.

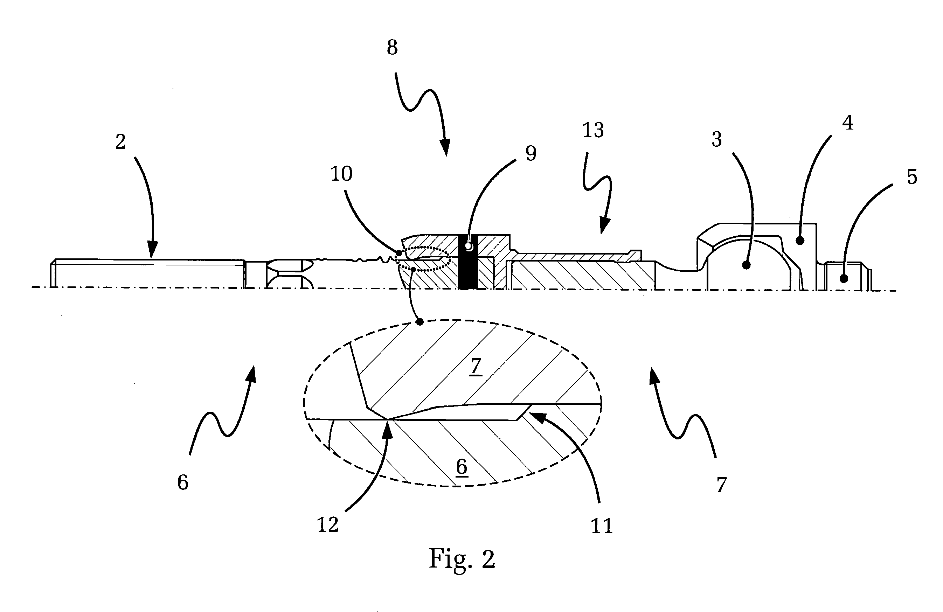

Im Unterschied hierzu zeigt Fig. 2 eine Ausführungsform für ein erfindungsgemäßes Lenkerelement mit Überlastsicherung. Man erkennt zwei Lenkerabschnitte 6 und 7, welche mit einer Überlastsicherung 8 untereinander verbunden sind. Die Überlastsicherung 8 weist ein hier als Scherstift ausgelegtes metallisches Abscherelement 9 auf (in Fig. 2 schwarz gezeichnet). Ferner besitzt die Überlastsicherung 8 erfindungsgemäß einen starren Endanschlag 10. Mit dem Endanschlag 10 wird der axiale Relativbewegungsweg der beiden Lenkerabschnitte 6 und 7 im Überlastfall (also beim überlastbedingten Abscheren des Scherstifts 9) begrenzt dadurch, dass ein am ersten Lenkerabschnitt 6 angeordneter innerer radialer Absatz 11 an einem am zweiten Lenkerabschnitt 7 angeordneten äußeren radialen Absatz 12 anschlägt.

Auf diese Weise bleiben die beiden Lenkerabschnitte 6 und 7 auch im Überlastfall nach dem Abscheren des Scherstifts 9 miteinander verbunden, und das Fahrzeug bleibt begrenzt funktions- und manövrierfähig (im angenommenen Beispielfall des Einsatzes des Lenkerelements als Spurstange). Aufgrund des zwischen den beiden Lenkerabschnitten 6 und 7, bzw. zwischen innerem 11 und äußerem radialen Absatz 12 gebildeten Axialspiels, welches - nach einem aufgetretenen Überlastfall - für den Fahrzeugführer am Lenkrad spürbar ist, wird diesem somit deutlich signalisiert, dass ein Problem bzw. eine Beschädigung im Bereich des Fahrwerks bzw. der Lenkung vorliegt.

Bei der Ausführungsform des erfindungsgemäßen Lenkerelements gemäß Fig. 2 ist der äußere radiale Absatz 12 an dem im Bereich der Überlastsicherung 8 hülsenartig ausgebildeten zweiten Lenkerabschnitt 7 in Form eines - nach dem montierenden Fügen der beiden Lenkerabschnitte 6, 7 - radial einwärts umgeformten Einzugs bei 12 realisiert.

Durchmesser und Material des hier das Abscherelement bildenden Scherstifts 9 lassen sich bei der in Fig. 2 dargestellten Ausführungsform des erfindungsgemäßen Lenkerelements im Sinne der modularen Auslegung jeweils so wählen, dass genau die gemäß Randbedingungen bzw. Kundenanforderungen erforderlichen Versagenskräfte verwirklicht werden. Es ist dann lediglich noch die passende Durchgangsbohrung durch die zusammengefügten Enden der Lenkerabschnitte 6, 7 anzubringen und der Scherstift 9 einzupressen, um das Lenkerelement 6, 7, 8 dementsprechend fertigzustellen.

In einem weiteren hülsenförmigen Bereich 13 des zeichnungsbezogen rechten Lenkerelements 7 ist bei der dargestellten Ausführungsform ein Kugelzapfen mit einer Gelenkkugel 3 aufgenommen. Dabei kann die Verbindung zwischen dem hülsenförmigen Bereich 13 des Lenkerelements 7 und dem Kugelzapfen 3 beispielsweise durch Gewinde, oder durch radiales Verpressen des hülsenförmigen Bereichs 13 auf die (im Sinne eines Formschlusses ggf. Vertiefungen aufweisende) Oberfläche des zylindrischen Bereichs des Kugelzapfens 3 im Verbindungsbereich erfolgen.

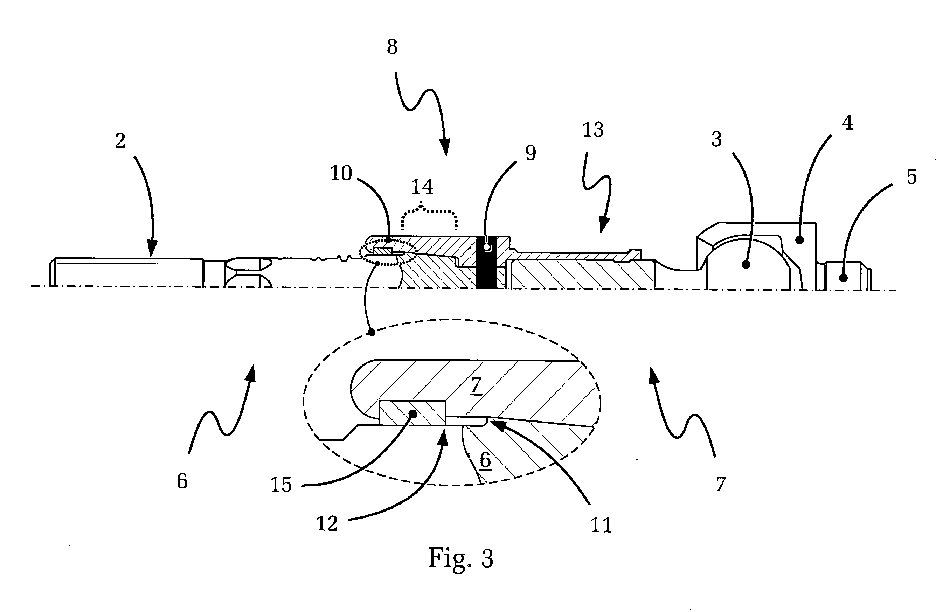

Fig. 3 zeigt ebenfalls ein erfindungsgemäßes Lenkerelement mit Überlastsicherung 8. Hierbei umfasst die Überlastsicherung 8 eine Kegelpassung 14 zwischen den beiden zusammengefügten Enden der Lenkerabschnitte 6, 7. Die Kegelpassung 14 ermöglicht eine genaue und spielfreie Beibehaltung der Relativposition der beiden Lenkerabschnitte im Überlappungsbereich auch unter Belastung, insbesondere unter Biegebelastung des Lenkerelements. Somit werden auch undefinierte Biegelasten über die Kegelpassung 14 zwischen den beiden Lenkerabschnitten 6, 7 weitergegeben, ohne dass der Scherstift 9 wesentlich bzw. unsymmetrisch belastet wird. Hierdurch wird die Zuverlässigkeit der Überlastsicherung 8 insbesondere im Hinblick auf die Reproduzierbarkeit des Funktionsfensters und der konstruktiv vorgesehenen Versagenskräfte sichergestellt.

Ein weiterer Unterschied der Ausführungsform gemäß Fig. 3 gegenüber der Ausführungsform gemäß Fig. 2 liegt darin, dass der Endanschlag 10 bei der Ausführungsform gemäß Fig. 3 durch das Zusammenwirken des am ersten Lenkerabschnitt 6 angeordneten inneren radialen Absatzes 11 mit einem radial eingeformten Anschlagring 15 gebildet ist. Die Begrenzung des axialen Relativbewegungswegs der beiden Lenkerabschnitte 6, 7 durch den eingeformten Anschlagring 15 bietet einen besonders widerstandsfähigen axialen Anschlag in Axialrichtung und eignet sich damit insbesondere für hochbeanspruchte Lenkerelemente. Der Anschlagring 15 wird dabei nach dem Fügen der beiden Lenkerabschnitte 6, 7 durch Umformen des Randes der hülsenförmigen Aufnahme am Lenkerelement 7 im Bereich der Überlastsicherung 8 bei 10 mit dem Lenkerelement 7 verbunden.

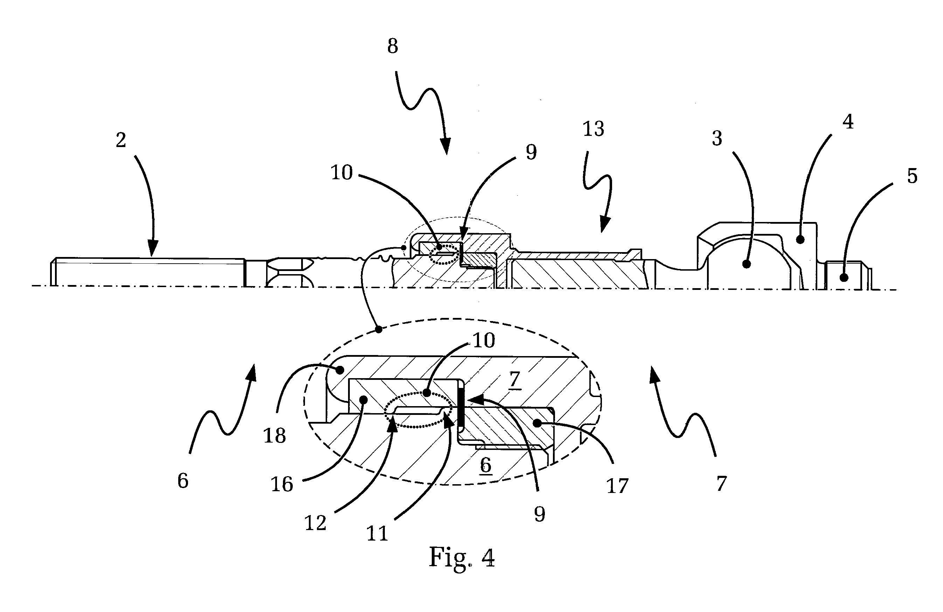

Fig. 4 zeigt eine weitere Ausführungsform für ein erfindungsgemäßes Lenkerelement mit Überlastsicherung. Im Unterschied zu den Ausführungsformen gemäß Fig. 2 und 3 ist das Abscherelement bei der Ausführungsform gemäß Fig. 4 als kreisringförmige Scherscheibe 9 ausgebildet (in Fig. 4 schwarz gezeichnet). Die Scherscheibe 9 ist dabei jeweils mittels eines Klemmrings 16 bzw. 17 mit den beiden Lenkerabschnitten 6 bzw. 7 verbunden. Der zeichnungsbezogen rechte Klemmring 17 ist bei der dargestellten Ausführungsform mittels Gewinde mit dem zeichnungsbezogen linken Lenkerabschnitt 6 verbunden und schließt - zusammen mit einem zugeordneten Absatz am Ende des zeichnungsbezogen linken Lenkerabschnitts 6 - einen radial innenseitigen Flächenbereich der Scherscheibe 9 klemmend ein, wodurch die Scherscheibe 9 formschlüssig mit dem zeichnungsbezogen linken Lenkerabschnitt verbunden wird.

Gleichzeitig ist die Scherscheibe durch das Zusammenwirken des zeichnungsbezogen linken Klemmrings 16 mit dem zeichnungsbezogen rechten Lenkerabschnitt 7 formschlüssig auch mit dem Lenkerabschnitt 7 verbunden. Die Verbindung zwischen dem Klemmring 16 und dem Lenkerabschnitt 7 wiederum erfolgt bei der dargestellten Ausführungsform durch Umformen des Randes 18 der hülsenförmigen Aufnahme des Lenkerelements 7 im Bereich der Überlastsicherung 8, so dass der Klemmring 16 schließlich formschlüssig mit dem Lenkerabschnitt 7 verbunden ist und dabei gleichzeitig den radial außenseitig liegenden Bereich der Scherscheibe 9 klemmend formschlüssig einschließt.

Mit anderen Worten bedeutet dies, dass der radial außenseitige Bereich der Scherscheibe 9 formschlüssig mit dem zeichnungsbezogen rechten Lenkerabschnitt 7, und der radial innenseitige Bereich der Scherscheibe 9 formschlüssig mit dem zeichnungsbezogen linken Lenkerabschnitt 6 verbunden ist, wodurch somit die beiden Lenkerabschnitte 6, 7 formschlüssig und spielfrei miteinander gekoppelt sind. Beim Auftreten einer Überlast entlang der Axialrichtung des Lenkerelements (bei der vorliegenden Ausführungsform in Zugrichtung) kommt es somit zum Abscheren der Scherscheibe 9 an der Übergangslinie zwischen den radial innenseitig bzw. außenseitig liegenden Flächenbereichen der Scherscheibe 9, und damit zum schlagartigen Versagen der Überlastsicherung bzw. des Lenkerelements.

Aufgrund der erfindungsgemäßen Eigenschaften der dargestellten Lenkerelemente führt das Versagen der Scherscheibe 9 (Fig. 4) bzw. des Scherstifts 9 (Fig. 2, 3, 5 und 6) somit nicht dazu, dass die Manövrierfähigkeit des damit (beispielsweise als Spurstange) ausgestatteten Kraftfahrzeugs verloren geht. Vielmehr führt das Abscheren von Scherscheibe 9 bzw. Scherstift 9 bei den dargestellten Lenkerelementen lediglich dazu, dass erfindungsgemäß der axiale Relativbewegungsweg freigegeben wird, wodurch im Beispielsfall - zur Signalisierung der aufgetretenen Überlast im Fahrwerk für den Fahrzeugführer - wiederum schlagartig ein entsprechendes Spiel am Lenkrad des Kraftfahrzeugs spürbar wird. Die grundsätzliche Funktionsfähigkeit des Lenkerelements bleibt jedoch nach wie vor gegeben, da der axiale Relativbewegungsweg im Versagensfall von Scherscheibe 9 bzw. Scherstift 9 durch den jeweiligen axialen Endanschlag 10 der Überlastsicherung begrenzt wird, so dass eine Separierung der Lenkerabschnitte 6, 7 des Lenkerelements voneinander ausgeschlossen ist.

Der axiale Endanschlag 10 wird bei der Ausführungsform gemäß Fig. 4 durch einen inneren radialen Absatz 11 am zeichnungsbezogen linken Lenkerabschnitt 6 im Zusammenwirken mit einem äußeren radialen Absatz 12 am Klemmring 16 des zeichnungsbezogen rechten Lenkerabschnitts 7 gebildet. Der Klemmring 16 erhält hierdurch eine konstruktiv vorteilhafte Doppelfunktion, indem er einerseits die Klemmung des radial äußeren Bereichs der Scherscheibe 9 übernimmt, und andererseits den äußeren radialen Absatz 12 zur Begrenzung des axialen Relativbewegungswegs im Versagensfall bereitstellt.

Das Lenkerelement gemäß Fig. 4 ist in der dargestellten Ausführungsform auf ein überlastbedingtes Versagen und Bereitstellung eines entsprechenden axialen Relativbewegungswegs in Zugrichtung ausgelegt. Eine Überlastsicherung auch in Druckrichtung kann dabei in der für sich genommen bekannten Weise durch geeignete Knickauslegung des Lenkerelements erreicht werden. Das Lenkerelement gemäß Fig. 4 kann jedoch durch geringfügige Änderungen der Geometrie im Bereich des Endes des zeichnungsbezogen linken Lenkerabschnitts 6 sowie des dort angeordneten zeichnungsbezogen rechten Klemmrings 17 ohne Weiteres auch doppeltwirkend ausgelegt werden. Hierdurch kann somit definiertes Versagen bei Überlast mit Bereitstellung eines entsprechenden axialen Relativbewegungswegs sowohl bei Überlast in Zugrichtung als auch in Druckrichtung verwirklicht werden. Ähnliches gilt analog auch für die Ausführungsform des Lenkerelements gemäß Fig. 2.

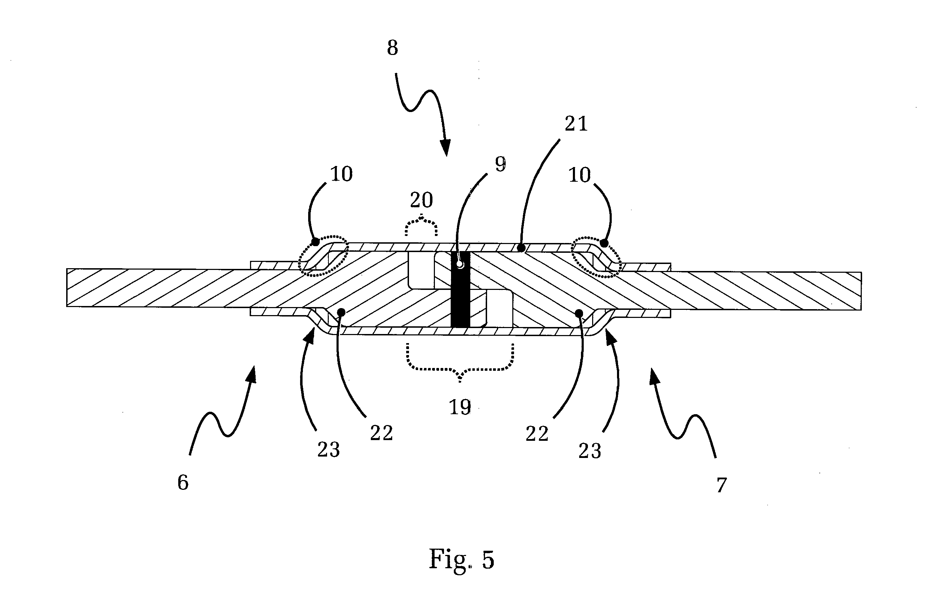

Fig. 5 zeigt eine weitere Ausführungsform für ein erfindungsgemäßes Lenkerelement mit Überlastsicherung. Bei der Ausführungsform gemäß Fig. 5 ist das Abscherelement wie bei den Ausführungsformen gemäß Fig. 2 und 3 wieder durch einen Scherstift 9 gebildet. Bei der Ausführungsform gemäß Fig. 5 durchdringt der Scherstift 9 die beiden Lenkerabschnitte 6, 7 in einem Überlappungsbereich 19, und verbindet somit die beiden Lenkerabschnitte 6, 7 im Normalbetrieb des Lenkerelements formschlüssig starr miteinander. Im Überlastfall wird der Scherstift 9 abgeschert, und es ergibt sich auch bei der Ausführungsform gemäß Fig. 5 wieder ein begrenzter axialer Relativbewegungsweg zwischen den beiden Lenkerabschnitten 6, 7.

Das Lenkerelement gemäß Fig. 5 ist dabei doppeltwirkend ausgelegt, das heißt, es kommt bei Überlast sowohl in Zugrichtung als auch in Druckrichtung zum Abscheren des Scherstifts 9 mit anschließender Bereitstellung eines begrenzten axialen Relativbewegungswegs. In Druckrichtung wird der axiale Relativbewegungsweg begrenzt durch den Abstand 20 zwischen der jeweiligen Stirnseite des jeweiligen Lenkerabschnitts und dem der Stirnseite gegenüberliegenden Absatz am jeweils anderen Lenkerabschnitt. In Zugrichtung findet ebenfalls eine Begrenzung des axialen Relativbewegungswegs statt, indem - nach einem Versagen des Scherstifts 9 bei Überlast in Zugrichtung - jeweilige Durchmessersprünge bzw. radiale Absätze 22 der Lenkerabschnitte 6, 7 an entsprechenden radialen Einzügen 23 in den mit Bezugsziffer 10 gekennzeichneten Bereichen des Gehäuses 21 zum Anschlag kommen.

Das die Überlastsicherung 8 umschließende Gehäuse 21 der Ausführungsform des Lenkerelements gemäß Fig. 5 besitzt dabei eine konstruktive Mehrfachfunktion. So wird durch das Gehäuse 21 einerseits der axiale Relativbewegungsweg zwischen den beiden Lenkerabschnitten 6, 7 bei Überlast in Zugrichtung begrenzt, andererseits bildet das Gehäuse 21 - aufgrund seiner allseitigen Anlage im Bereich der Enden der Lenkerabschnitte 6, 7 - eine Versteifung des Lenkerelements im Bereich der Überlastsicherung 8 insbesondere gegen Biegung, und schließlich schützt das Gehäuse 21 die Überlastsicherung 8 vor Umgebungseinflüssen und Korrosion.

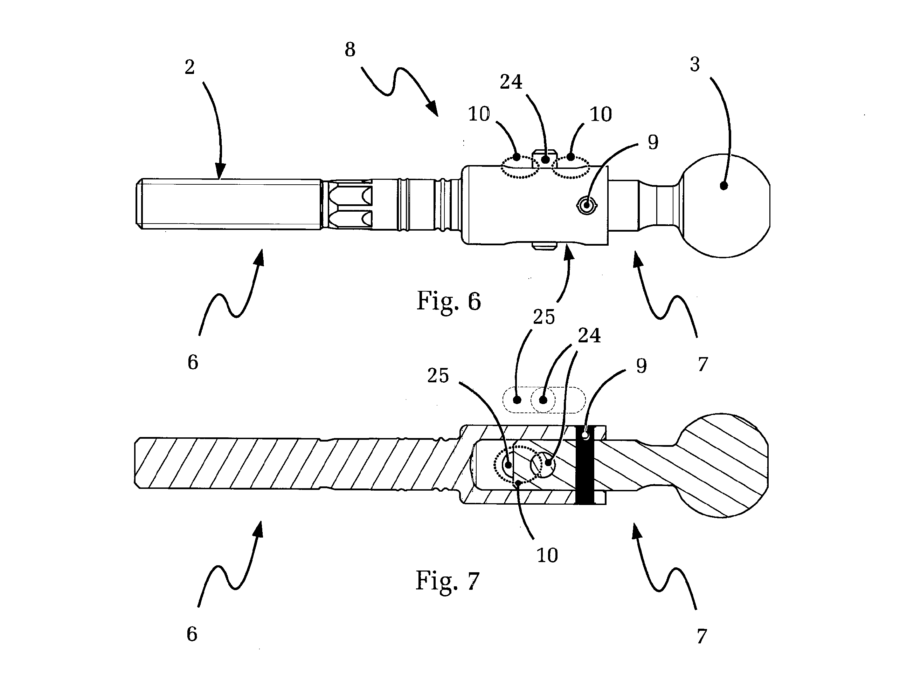

Eine weitere Ausführungsform für ein erfindungsgemäßes Lenkerelement mit Überlastsicherung ist in den Fig. 6 und 7 dargestellt. Bei der Ausführungsform gemäß Fig. 6 und 7 kommt als Abscherelement wieder ein Scherstift 9 zum Einsatz, der die Enden der beiden Lenkerabschnitte 6, 7 durchdringt. Die Ausführungsform gemäß Fig. 6 und 7 ist wieder doppeltwirkend ausgelegt, d.h. bei Überlast sowohl in Zug- als auch in Druckrichtung erfolgt ein Abscheren des Scherstifts 9 mit anschließender Bereitstellung eines begrenzten axialen Relativbewegungswegs. Die Begrenzung des axialen Relativbewegungswegs im Überlastfall erfolgt bei der Ausführungsform gemäß Fig. 6 und 7 durch Endanschläge 10, umfassend einen Anschlagstift 24, der die Enden der beiden Lenkerabschnitte 6, 7 ebenfalls durchdringt. Dabei ist der Anschlagstift 24 in einen der beiden Lenkerabschnitte eingepresst (hier in den zeichnungsbezogen rechten Lenkerabschnitt 7), während der Anschlagstift 24 den anderen Lenkerabschnitt (hier den zeichnungsbezogen linken Lenkerabschnitt 6) in einer Langlochausnehmung 25 durchdringt. Der besseren Erkennbarkeit halber ist die Langlochausnehmung 25 und der die Langlochausnehmung 25 durchdringende Anschlagstift 24 bei Fig. 7 nochmals separat strichliert dargestellt.

Im Überlastfall mit nachfolgendem Versagen und Abscheren des Scherstifts 9 können sich linke und rechte Lenkerabschnitte 6 und 7 somit entlang des axialen Relativbewegungswegs frei gegeneinander verschieben solange, bis der Anschlagstift 24 am jeweiligen Ende der Langlochausnehmung 25 zum Anschlag kommt.

Die Ausführungsform gemäß Fig. 6 und 7 hat dabei insbesondere den Vorteil der kostengünstigen Ausführung und einfachen Montage. Ebenfalls bleibt der erfindungsgemäße Vorteil der einfachen modularen Anpassbarkeit der Versagenskräfte an die jeweiligen Randbedingungen bzw. Kundenforderungen erhalten, indem der Scherstift 9 in Material und/oder Durchmesser entsprechend ausgewählt wird.

Im Ergebnis wird somit deutlich, dass mit der Erfindung ein Lenkerelement mit Überlastsicherung geschaffen wird, das eine modulare Anpassbarkeit, ein definiertes und reproduzierbares Versagensverhalten im Überlastfall mit einer Notfunktionalität nach Überlast verbindet, wobei dem Fahrer eine aufgetretene Beschädigung bzw. Überlast - z.B. an einer erfindungsgemäß ausgeführten Spurstange - dank der Erfindung ohne weitere Zusatzeinrichtungen unmittelbar am Lenkrad signalisiert werden kann.

### Bezugszeichenliste

- 1: Lenkerabschnitt
- 2: Gewinde
- 3: Kugelzapfen, Gelenkkugel
- 4: Gelenkgehäuse
- 5: Anschlussgewinde
- 6, 7: Lenkerabschnitt
- 8: Überlastsicherung
- 9: Scherstift, Scherscheibe
- 10: Axialanschlageinrichtung
- 11: radialer Absatz
- 12: radialer Absatz, radialer Einzug
- 13: hülsenförmiger Bereich
- 14: Kegelpassung
- 15: Anschlagring
- 16, 17: Klemmring
- 18: Hülsenrand
- 19: Überlappungsbereich
- 20: Axialabstand
- 21: Gehäuse
- 22: radialer Absatz
- 23: radialer Einzug
- 24: Anschlagstift
- 25: Langlochausnehmung

## Patentansprüche

1. Lenkerelement, beispielsweise Spurstange, zur koppelnden Verbindung zweier Baugruppen, das Lenkerelement umfassend zwei im Wesentlichen stabförmige Lenkerabschnitte (6, 7), wobei die Lenkerabschnitte (6, 7) mittels einer Überlastsicherung (8) miteinander verbunden und im Überlastfall axial gegeneinander bewegbar sind, wobei die Überlastsicherung (8) zumindest einen starren Endanschlag (10) zur Begrenzung des axialen Relativbewegungswegs der beiden Lenkerabschnitte (6, 7) im Überlastfall aufweist,
**dadurch gekennzeichnet,**
**dass** die Überlastsicherung (8) zumindest ein die beiden Lenkerabschnitte (6, 7) formschlüssig starr verbindendes, modular austauschbares Abscherelement (9) aus Metall umfasst.

2. Lenkerelement nach Anspruch 1,
**dadurch gekennzeichnet,**
**dass** das Abscherelement (9) entlang beider axialer Richtungen des Lenkerelements abscherbar ist.

3. Lenkerelement nach Anspruch 1 oder 2,
**gekennzeichnet durch**
jeweils einen axialen Relativbewegungsweg mit jeweils einem Endanschlag (10) entlang jeder der beiden axialen Richtungen.

4. Lenkerelement nach einem der Ansprüche 1 bis 3,
**dadurch gekennzeichnet,**
**dass** erster (6) und zweiter Lenkerabschnitt (7) im Bereich der Überlastsicherung (8) koaxial ineinandergreifend angeordnet sind, wobei der zweite Lenkerabschnitt (7) im Überlappungsbereich hülsenartig ausgebildet ist und das dem Überlappungsbereich zugeordnete Ende des ersten Lenkerabschnitts (6) aufnimmt.

5. Lenkerelement nach einem der Ansprüche 1 bis 4,
**dadurch gekennzeichnet,**
**dass** erster (6) und zweiter Lenkerabschnitt (7) innerhalb des Überlappungsbereichs eine Kegelpassung (14) bilden.

6. Lenkerelement nach einem der Ansprüche 1 bis 5,
**dadurch gekennzeichnet,**
**dass** das Abscherelement als Scherstift (9) ausgebildet ist, wobei erster (6) und zweiter Lenkerabschnitt (7) einander im Bereich der Überlastsicherung (8) in axialer Richtung zumindest bereichsweise überlappen.

7. Lenkerelement nach Anspruch 6,
**dadurch gekennzeichnet,**
**dass** das als Scherstift (9) ausgebildete Abscherelement den ersten (6) und zweiten Lenkerabschnitt (6) im Überlappungsbereich entlang eines vollständigen Durchmessers des Überlappungsbereichs durchgreift.

8. Lenkerelement nach einem der Ansprüche 1 bis 5,
**dadurch gekennzeichnet,**
**dass** das Abscherelement als im Überlappungsbereich angeordnete kreisringförmige Scherscheibe (9) ausgebildet ist.

9. Lenkerelement nach Anspruch 8,
**dadurch gekennzeichnet,**
**dass** die Scherscheibe (9) jeweils mittels eines am jeweiligen Lenkerabschnitt (6, 7) formschlüssig angeordneten Klemmrings (16, 17) mit dem ersten (6) und/oder mit dem zweiten Lenkerabschnitt (7) formschlüssig verbunden ist.

10. Lenkerelement nach einem der Ansprüche 1 bis 9,
**dadurch gekennzeichnet,**
**dass** eine Einrichtung (10) zur Begrenzung des axialen Relativbewegungswegs im Überlastfall entlang zumindest einer axialen Richtung des Lenkerelements durch zwei axial beabstandete, innere (11) und äußere radiale Absätze (12) der Überlastsicherung (8) gebildet ist, wobei der innere radiale Absatz (11) innerhalb des Überlappungsbereichs der Lenkerabschnitte (6, 7) einstückig am ersten Lenkerabschnitt (6), und der äußere radiale Absatz (12) an einem dem zweiten Lenkerabschnitt (7) zugeordneten Klemmring (16) einstückig angeordnet ist.

11. Lenkerelement nach einem der Ansprüche 1 bis 9,
**dadurch gekennzeichnet,**
**dass** eine Einrichtung (10) zur Begrenzung des axialen Relativbewegungswegs im Überlastfall entlang zumindest einer axialen Richtung durch zwei axial beabstandete, innere (11) und äußere radiale Absätze (12) der Überlastsicherung (8) gebildet ist, wobei der innere radiale Absatz (11) innerhalb des Überlappungsbereichs der Lenkerabschnitte (6, 7) einstückig am ersten Lenkerabschnitt (6), und der äußere radiale Absatz (12) an dem im Überlappungsbereich hülsenartig ausgebildeten zweiten Lenkerabschnitt einstückig in Form eines radial umgeformten Einzugs (12) angeordnet ist.

12. Lenkerelement nach einem der Ansprüche 1 bis 9,
**dadurch gekennzeichnet,**
**dass** ein Mittel (10) zur Begrenzung des axialen Relativbewegungswegs im Überlastfall entlang zumindest einer axialen Richtung durch zwei axial beabstandete, innere (11) und äußere radiale Absätze (12) der Überlastsicherung (8) gebildet ist, wobei der innere radiale Absatz (11) innerhalb des Überlappungsbereichs der Lenkerabschnitte (6, 7) einstückig am ersten Lenkerabschnitt (6), und der äußere radiale Absatz (12) an dem im Überlappungsbereich hülsenartig ausgebildeten zweiten Lenkerabschnitt (7) in Form eines radial eingeformten Anschlagrings (15) angeordnet ist.

13. Strebenelement nach einem der Ansprüche 1 bis 12,
**dadurch gekennzeichnet,**
**dass** Überlastsicherung (8) und Abscherelement in einem das Strebenelement im Bereich der Überlastsicherung (8) umgreifenden Sicherungsgehäuse (21) angeordnet sind.

14. Strebenelement nach Anspruch 13,
**dadurch gekennzeichnet,**
**dass** das Sicherungsgehäuse (21) die Überlastsicherung (8) mit dem Abscherelement (9) allseitig anliegend umschließt und die an der Überlastsicherung (8) angreifenden Strebenenden radial spaltlos umgreift.

15. Lenkerelement nach Anspruch 13 oder 14,
**dadurch gekennzeichnet,**
**dass** ein Mittel (10) zur Begrenzung des axialen Relativbewegungswegs im Überlastfall entlang zumindest einer axialen Richtung durch axial beabstandete, innere (22) und äußere radiale Absätze (23) gebildet ist, wobei der innere radiale Absatz (22) einstückig an einem Lenkerabschnitt (6, 7) angeordnet ist, und der äußere radiale Absatz (23) durch einen radialen Einzug (23) des Sicherungsgehäuses (21) gebildet ist

16. Lenkerelement nach einem der Ansprüche 1 bis 15,
**dadurch gekennzeichnet,**
**dass** ein Mittel (10) zur Begrenzung des axialen Relativbewegungswegs im Überlastfall entlang zumindest einer axialen Richtung durch einen die beiden Lenkerabschnitte (6, 7) im Überlappungsbereich radial durchdringenden Anschlagstift (24) gebildet ist, wobei der Anschlagstift zumindest einen der beiden Lenkerabschnitte (6, 7) in deren Überlappungsbereich in einer axial ausgerichteten Langlochausnehmung (25) durchgreift.

17. Lenkerelement nach einem der Ansprüche 1 bis 16,
**dadurch gekennzeichnet,**
**dass** der erste und/oder zweite Lenkerabschnitt (6, 7) an seinem der Überlastsicherung (8) abgewandten Ende (13) zur formschlüssigen Aufnahme eines weiteren Lenkerabschnitts bzw. des Schafts (3) eines Kugelgelenks eingerichtet ist.

18. Strebenelement nach einem der Ansprüche 1 bis 17,
**dadurch gekennzeichnet,**
**dass** der erste und/oder zweite Lenkerabschnitt (6, 7) an seinem der Überlastsicherung (8) abgewandten Ende einstückig mit einer Gelenkkugel (3) ausgebildet ist.

## Claims

1. Suspension element, for example track rod, for the coupling connection of two assemblies, the suspension element comprising two substantially rod-shaped suspension sections (6, 7), wherein the suspension sections (6, 7) are connected to each other by means of an overload protection means (8) and are movable axially in relation to each other in the event of an overload, wherein the overload protection means (8) has at least one rigid end stop (10) for limiting the axial relative movement travel of the two suspension sections (6, 7) in the event of an overload, **characterized in that** the overload protection means (8) comprises at least one metal, modularly interchangeable shearing-off element (9) which rigidly connects the two suspension sections (6, 7) in a form-fitting manner.

2. Suspension element according to Claim 1, **characterized in that** the shearing-off element (9) can be sheared off along both axial directions of the suspension element.

3. Suspension element according to Claim 1 or 2, **characterized by** a respective axial relative movement travel having a respective end stop (10) along each of the two axial directions.

4. Suspension element according to one of Claims 1 to 3, **characterized in that** first suspension section (6) and second suspension section (7) are arranged in a coaxially intermeshing manner in the region of the overload protection means (8), wherein the second suspension section (7) is of sleeve-like design in the overlapping region and receives that end of the first suspension section (6) which is assigned to the overlapping region.

5. Suspension element according to one of Claims 1 to 4, **characterized in that** first suspension section (6) and second suspension section (7) form a cone fit within the overlapping region.

6. Suspension element according to one of Claims 1 to 5, **characterized in that** the shearing-off element is designed as a shearing pin (9), wherein first suspension section (6) and second suspension section (7) overlap each other at least in regions in the axial direction in the region of the overload protection means (8).

7. Suspension element according to Claim 6, **characterized in that** the shearing-off element which is designed as a shearing pin (9) reaches through the first suspension section (6) and the second suspension section (6) in the overlapping region along a full diameter of the overlapping region.

8. Suspension element according to one of Claims 1 to 5, **characterized in that** the shearing-off element is designed as a circular-ring-shaped shearing disc (9) arranged in the overlapping region.

9. Suspension element according to Claim 8, **characterized in that** the shearing disc (9) is respectively connected to the first suspension section (6) and/or to the second suspension section (7) in a form-fitting manner by means of a clamping ring (16, 17) arranged in the form-fitting manner on the respective suspension section (6, 7).

10. Suspension element according to one of Claims 1 to 9, **characterized in that** a device (10) for limiting the axial relative movement travel along at least one axial direction of the suspension element in the event of an overload is formed by two axially spaced-apart inner (11) and outer radial steps (12) of the overload protection means (8), wherein the inner radial step (11) is arranged integrally on the first suspension section (6) within the overlapping region of the suspension sections (6, 7), and the outer radial step (12) is arranged integrally on a clamping ring (16) assigned to the second suspension section (7).

11. Suspension element according to one of Claims 1 to 9, **characterized in that** a device (10) for limiting the axial relative movement travel along at least one axial direction in the event of an overload is formed by two axially spaced-apart inner (11) and outer radial steps (12) of the overload protection means (8), wherein the inner radial step (11) is arranged integrally on the first suspension section (6) within the overlapping region of the suspension sections (6, 7), and the outer radial step (12) is arranged integrally in the form of a radially deformed tapered portion (12) on the second suspension section, which is of sleeve-like design in the overlapping region.

12. Suspension element according to one of Claims 1 to 9, **characterized in that** a means (10) for limiting the axial relative movement travel along at least one axial direction in the event of an overload is formed by two axially spaced-apart, inner (11) and outer radial stops (12) of the overload protection means (8), wherein the inner radial step (11) is arranged integrally on the first suspension section (6) within the overlapping region of the suspension sections (6, 7), and the outer radial step (12) is arranged in the form of a radially formed stop ring (15) on the second suspension section (7), which is of sleeve-like design in the overlapping region.

13. Strut element according to one of Claims 1 to 12, **characterized in that** the overload protection means (8) and the shearing-off element are arranged in a protective housing (21) engaging around the strut element in the region of the overload protection means (8).

14. Strut element according to Claim 13, **characterized in that** the protective housing (21) surrounds the overload protection means (8) together with the shearing-off element (9) adjacent on all sides and engages radially without a gap around the strut ends engaging on the overload protection means (8).

15. Suspension element according to Claim 13 or 14, **characterized in that** a means (10) for limiting the axial relative movement travel along at least one axial direction in the event of an overload is formed by axially spaced-apart, inner (22) and outer radial steps (23), wherein the inner radial step (22) is arranged integrally on a suspension section (6, 7), and the outer radial step (23) is formed by a radial tapered portion (23) of the protective housing (21).

16. Suspension element according to one of Claims 1 to 15, **characterized in that** a means (10) for limiting the axial relative movement travel along at least one axial direction in the event of an overload is formed by a stop pin (24) which radially penetrates the two suspension sections (6, 7) in the overlapping region, wherein the stop pin reaches through at least one of the two suspension sections (6, 7) in an axially oriented elongated-hole recess (25) in the overlapping region of said suspension sections.

17. Suspension element according to one of Claims 1 to 16, **characterized in that** the first and/or second suspension section (6, 7) is designed at the end (13) thereof which is remote from the overload protection means (8) for the form-fitting receiving of a further suspension section or of the stem (3) of a ball-and-socket joint.

18. Strut element according to one of Claims 1 to 17, **characterized in that** the first and/or second suspension section (6, 7) is formed integrally with a socket ball (3) at the end thereof which faces away from the overload protection means (8).

## Revendications

1. Élément biellette, par exemple barre d'accouplement, pour la liaison par accouplement de deux ensembles, l'élément biellette comportant deux portions de biellette (6, 7) essentiellement en forme de barre, les portions de biellette (6, 7) étant reliées l'une à l'autre au moyen d'une protection de surcharge (8) et étant déplaçables axialement l'une par rapport à l'autre en cas de surcharge, la protection de surcharge (8) comprenant au moins une butée de fin de course (10) rigide pour limiter la course de déplacement relatif axial des deux portions de biellette (6, 7) en cas de surcharge,
**caractérisé en ce que**
la protection de surcharge (8) comporte au moins un élément de cisaillement (9) en métal reliant rigidement les deux portions de biellette (6, 7) par engagement par coopération de formes et pouvant être remplacé de manière modulaire.

2. Élément biellette selon la revendication 1, **caractérisé en ce que**
l'élément de cisaillement (9) peut être cisaillé le long des deux sens axiaux de l'élément biellette.

3. Élément biellette selon la revendication 1 ou 2, **caractérisé par**
une course de déplacement relatif axial respective comprenant une butée de fin de course (10) respective le long de chacun des deux sens axiaux.

4. Élément biellette selon l'une quelconque des revendications 1 à 3,
**caractérisé en ce que**
la première (6) et la deuxième portion de biellette (7) sont disposées de manière à s'engager l'une dans l'autre de manière coaxiale dans la région de la protection de surcharge (8), la deuxième portion de biellette (7) étant réalisée sous forme de douille dans la région de chevauchement et recevant l'extrémité de la première portion de biellette (6) associée à la région de chevauchement.

5. Élément biellette selon l'une quelconque des revendications 1 à 4,
**caractérisé en ce que**
la première (6) et la deuxième portion de biellette (7) forment un ajustement conique (14) à l'intérieur de la région de chevauchement.

6. Élément biellette selon l'une quelconque des revendications 1 à 5,
**caractérisé en ce que**
l'élément de cisaillement est réalisé sous forme de goupille de cisaillement (9), la première (6) et la deuxième portion de biellette (7) se chevauchant au moins en partie dans la direction axiale dans la région de la protection de surcharge (8).

7. Élément biellette selon la revendication 6,
**caractérisé en ce que**
l'élément de cisaillement réalisé sous forme de goupille de cisaillement (9) vient en prise à travers la première (6) et la deuxième portion de biellette (6) dans la région de chevauchement le long d'un diamètre complet de la région de chevauchement.

8. Élément biellette selon l'une quelconque des revendications 1 à 5,
**caractérisé en ce que**
l'élément de cisaillement est réalisé sous forme de disque de cisaillement (9) en forme d'anneau circulaire disposé dans la région de chevauchement.

9. Élément biellette selon la revendication 8,
**caractérisé en ce que**
le disque de cisaillement (9) est relié par engagement par coopération de formes à la première (6) et/ou à la deuxième portion de biellette (7) au moyen à chaque fois d'une bague de serrage (16, 17) disposée avec engagement par coopération de formes sur la portion de biellette (6, 7) respective.

10. Élément biellette selon l'une quelconque des revendications 1 à 9,
**caractérisé en ce**
**qu'**un dispositif (10) de limitation de la course de déplacement relatif axial en cas de surcharge le long d'au moins un sens axial de l'élément biellette est formé par deux épaulements radiaux intérieur (11) et extérieur (12), espacés axialement, de la protection de surcharge (8), l'épaulement (11) radial intérieur étant disposé d'une seule pièce sur la première portion de biellette (6) à l'intérieur de la région de chevauchement des portions de biellette (6, 7), et l'épaulement (12) radial extérieur étant disposé d'une seule pièce sur une bague de serrage (16) associée à la deuxième portion de biellette (7).

11. Élément biellette selon l'une quelconque des revendications 1 à 9,
**caractérisé en ce**
**qu'**un dispositif (10) de limitation de la course de déplacement relatif axial en cas de surcharge le long d'au moins un sens axial est formé par deux épaulements radiaux intérieur (11) et extérieur (12), espacés axialement, de la protection de surcharge (8), l'épaulement (11) radial intérieur étant disposé d'une seule pièce sur la première portion de biellette (6) à l'intérieur de la région de chevauchement des portions de biellette (6, 7), et l'épaulement (12) radial extérieur étant disposé sur la deuxième portion de biellette réalisée en forme de douille dans la région de chevauchement d'une seule pièce sous la forme d'un retrait (12) formé radialement.

12. Élément biellette selon l'une quelconque des revendications 1 à 9,
**caractérisé en ce**
**qu'**un moyen (10) de limitation de la course de déplacement relatif axial en cas de surcharge le long d'au moins un sens axial est formé par deux épaulements radiaux intérieur (11) et extérieur (12), espacés axialement, de la protection de surcharge (8), l'épaulement (11) radial intérieur étant disposé d'une seule pièce sur la première portion de biellette (6) à l'intérieur de la région de chevauchement des portions de biellette (6, 7), et l'épaulement (12) radial extérieur étant disposé sur la deuxième portion de biellette (7) réalisée en forme de douille dans la région de chevauchement sous la forme d'une bague de butée (15) moulée radialement.

13. Élément de bras selon l'une quelconque des revendications 1 à 12,
**caractérisé en ce que**
la protection de surcharge (8) et l'élément de cisaillement sont disposés dans un boîtier de protection (21) venant en prise autour de l'élément de bras dans la région de la protection de surcharge (8).

14. Élément de bras selon la revendication 13,
**caractérisé en ce que**
le boîtier de protection (21) entoure la protection de surcharge (8) avec l'élément de cisaillement (9) en appui de tous côtés et vient en prise sans jeu radialement autour des extrémités de bras venant en prise avec la protection de surcharge (8).

15. Élément biellette selon la revendication 13 ou 14,
**caractérisé en ce**
**qu'**un moyen (10) de limitation de la course de déplacement relatif axial en cas de surcharge le long d'au moins un sens axial est formé par des épaulements radiaux intérieur (22) et extérieur (23), espacés axialement, l'épaulement (22) radial intérieur étant disposé d'une seule pièce sur une portion de biellette (6, 7), et l'épaulement (23) radial extérieur étant formé par un retrait (23) radial du boîtier de protection (21).

16. Élément biellette selon l'une quelconque des revendications 1 à 15,
**caractérisé en ce**
**qu'**un moyen (10) de limitation de la course de déplacement relatif axial en cas de surcharge le long d'au moins un sens axial est formé par une goupille de butée (24) traversant radialement les deux portions de biellette (6, 7) dans la région de chevauchement, la goupille de butée venant en prise à travers au moins l'une des deux portions de biellette (6, 7) dans leur région de chevauchement dans un évidement en forme de trou oblong (25) orienté axialement.

17. Élément biellette selon l'une quelconque des revendications 1 à 16,
**caractérisé en ce que**
la première et/ou la deuxième portion de biellette (6, 7) est/sont conçue(s) à son/leurs extrémité(s) (13) opposée(s) à la protection de surcharge (8) pour recevoir par coopération de formes une portion de biellette supplémentaire ou le corps (3) d'une articulation à rotule.

18. Élément de bras selon l'une quelconque des revendications 1 à 17,
**caractérisé en ce que**
la première et/ou la deuxième portion de biellette (6, 7) est/sont réalisée(s) d'une seule pièce avec une rotule d'articulation (3) à son/leurs extrémité(s) opposée(s) à la protection de surcharge (8).
